# EUROPEAN PATENT SPECIFICATION

(11) **EP 2 033 763 B1**
(45) Date of publication and mention of the grant of the patent: **07.05.2014**
(21) Application number: 08020380.5
(22) Date of filing: 24.02.2003
(51) Int. Cl.: B29C 47/32, B29C 47/92, B29D 30/16, B29D 30/30

(54) **Method of manufacturing a thin rubber member, rubber roller, and method of rolling a rubber**
Verfahren zur Herstellung eines dünnen Gummiteils, Gummiwalze und Verfahren zum Walzen von Gummi
Procédé de fabrication d'un élément en caoutchouc mince, rouleau en caoutchouc, et procédé de roulage d'un caoutchouc

(30) Priority: 22.02.2002 JP 2002046811; 06.03.2002 JP 2002059953; 01.05.2002 JP 2002129784
(43) Date of publication of application: 11.03.2009
(62) Divisional of application: 03707011.7
(73) Proprietor: Bridgestone Corporation, Tokyo 104-8340 (JP)
(72) Inventor: Ogawa, Kenji, Tokyo 104-8340 (JP); Kata, Takehiro, Tokyo 104-8340 (JP)
(74) Representative: Waldren, Robin Michael

(56) References cited:
- EP-A- 0 453 294
- EP-A- 0 619 170
- EP-A- 1 145 835
- JP-A- 4 182 120
- JP-A- 7 148 757
- JP-A- 11 314 261
- JP-A- 2000 043 072
- JP-A- 2000 289 122
- JP-A- 2001 030 372
- JP-A- 2001 328 180
- US-A- 5 267 847

## Description

### BACKGROUND OF THE INVENTION

### Field of the Invention

The present invention relates to a rubber roller die for sequentially forming an elongated rubber strip, to a method of rolling a rubber for sequentially forming an elongated rubber strip, to the use of the rubber roller die and to the use of the method of rolling a rubber.

### Background Art

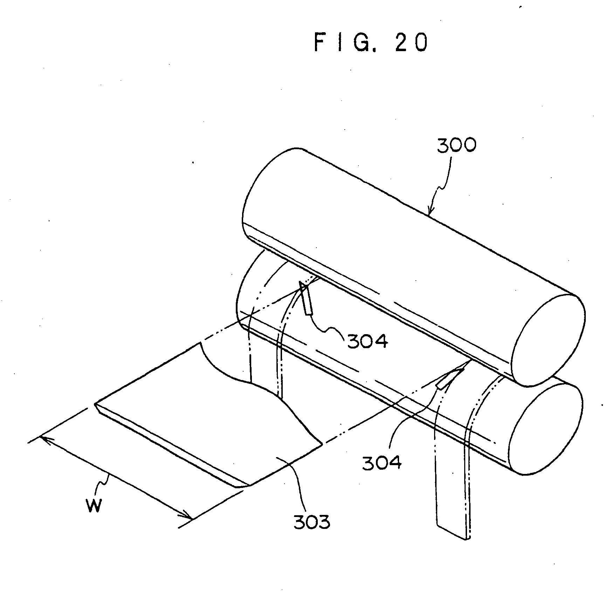

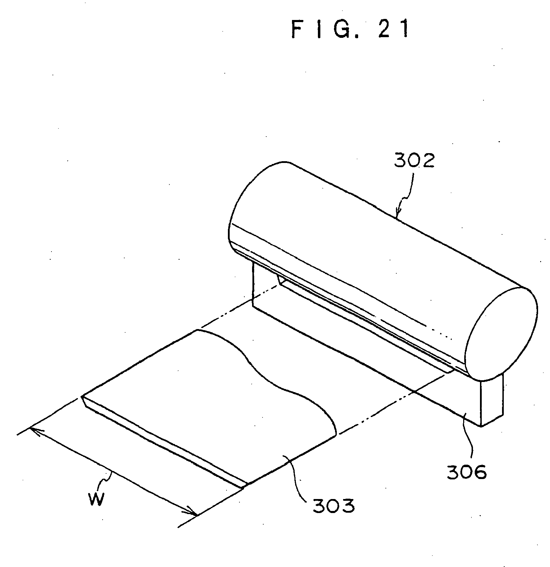

Conventionally, a rubber member used for a tire, for example, a rubber sheet such as an inner liner or the like has been manufactured by a method of sheeting a rubber member by a so-called 2-roller die 300 as shown in Fig. 20, a method of sheeting a rubber sheet by a so-called 1-roller die 2 as shown in Fig. 21, or a method using four calendar rolls (not shown).

As for an inner liner 303 formed by such conventional methods as described above, the inner liner 303 during sheeting has a width W that corresponds to a distance between one bead toe and the other bead toe, along a tire inner surface as seen from a cross section along a tire rotational axis. After the extruded with this width, the inner liner 303 was cut to a length that corresponds to a circumferential length of the tire inner surface.

Further, it is desired that both end portions in a transverse direction of the inner liner 303 be tapered in order to prevent air or inner surface solutions from entering the inner liner 303. As shown in Fig. 20, the both end portions are diagonally cut by the cutters 304, or as shown in Fig. 21, the shape of a cap 306 is determined such that each of the both end portions of the inner liner 303 is tapered.

During a manufacturing process of a tire, a sheet of the inner liner 303 thus obtained is wound around a drum, and thereafter, tire structural members such as a carcass ply and the like are sequentially wound around the drum to thereby form a green tire.

If the inner liner 303 is manufactured by this method, a plurality of roller dies having different widths must be prepared in accordance with a size or a type of a tire, whereby a plant and equipment cost at a factory was high.

Thus, in recent years, a method in which a ribbon-shaped unvulcanized rubber strip is spirally wound around a drum to form a desired rubber sheet on the drum has been proposed (Japanese Patent Applications (JP-A) Laid-Open No. 2000-246812 or the like).

In a conventional method, when the ribbon-shaped rubber strip is wound around a drum such that portions in the vicinities of transverse direction end surfaces of the ribbon-shaped rubber strip are overlapped with one another so as not to form gaps between windings of a spiral. Therefore, level differences are formed on the surface of the rubber sheet thus formed, air is easily accumulated into concave portions of the level differences, and there has been a concern about a treatment of end portions of the rubber sheet.

Therefore, the inventors conducted various experiments and arrived upon a method of effectively manufacturing a thin rubber member which is optimal for inner liners or the like, in which level differences are not formed, and which can accommodate various sizes, by forming an elongated rubber strip in which taper portions are provided at both end portions in a transverse direction and by overlapping the taper portions one another.

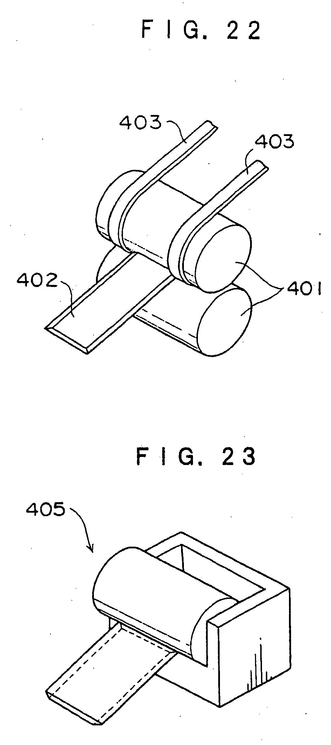

In a case in which a rolled rubber sheet (rubber strip) having a predetermined width is sequentially formed with high accuracy, in prior art, as shown in Fig. 22, only a required configuration portion 402 is cut from the rolled rubber sheet fed out from a calendar roll 401 in the end, and remaining portions 403 are returned to an extruder or the like as a knead-back rubber and are subjected to a knead-back.

Change in a discharge amount of an unvulcanized rubber with respect to the calendar roll affects a width of the rolled rubber sheet that is supposed to be molded, and a width variation thereby occurs. Especially when both edge portions of the rolled rubber sheet to be molded are provided with inclining taper portions, it becomes difficult to obtain a width with high accuracy. For this reason, the rolled rubber sheet fed out from the calendar rolls 401 is cut into a required configuration so that the remaining rubbers 403 are provided for a knead-back.

The smaller (the more acute) the inclination angle of the taper portion of the rolled rubber sheet in order to improve a quality, the more difficult the increase of the width accuracy, thus making it more necessary to precisely cut the rolled rubber sheet into a required configuration.

To precisely cut the rolled rubber sheet into a required configuration by using the calendar roll 401 leads to a requirement of a knead-back operation for providing the remaining portion 403 for a knead back. Accordingly, it becomes disadvantageous in respect of space, troubles may easily occur, and there is also a concern that productivity may be inhibited.

Further, to repeat a knead-back of rubber leads to a change of rubber properties. This is the last operation to be carried out in order to stabilize the quality of the product.

There is provided a method in which a rolled rubber sheet is formed with high width accuracy by using a 1-roller die 405 as shown in Fig. 23. The 1-roller die 405 is heavy, requires high manufacturing cost, and outputs a small amount of a leakage of rubber thus necessitating a periodical treatment.

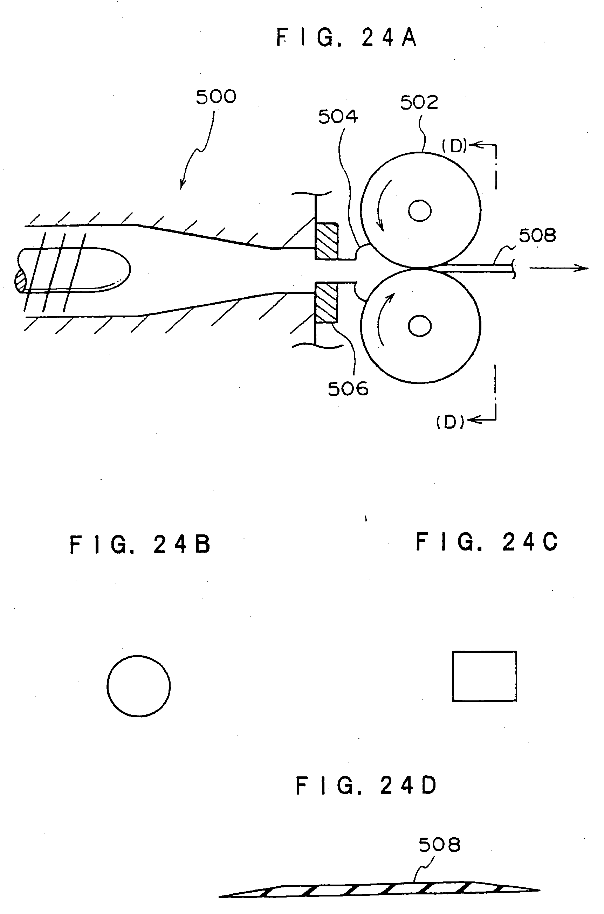

If an elongated rolled rubber sheet 508, which is formed into a cross-sectional configuration as shown in Fig. 24 (D) whose end portions in the transverse direction are tapered so as to form a taper portion respectively at both end portions in the transverse direction of the elongated rolled rubber sheet 508, is rolled by a roller head, there have been provided two methods, one in which a rubber bank is produced on a roller head and the other in which a rubber bank is produced on the roller head.

First, if a rubber bank is produced on a roller head, as shown in Fig. 24 (A), a rubber bank 504 is formed on a roller head 502 disposed at a rubber discharge side of a rubber extruder 500. Since a cap 506 of a rubber extruder 500 is used simply to supply a constant amount of rubber into the roller head 502, the cap 506 is generally formed into a circular shape as shown in Fig. 24 (B) or a rectangular shape as shown in Fig. 24 (C).

Next, if a rubber bank is not produced on the roller head 502, the opening of the cap 506 is formed into a rectangular shape substantially similar to a roller head profile.

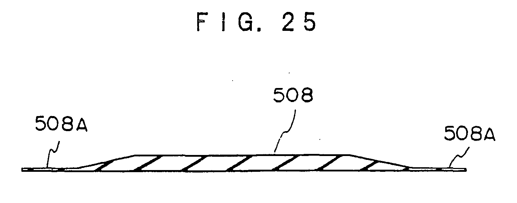

With a conventional method of producing a rubber bank on a roller head, a bank amount increases or decreases due to a variation of an amount in which rubber is discharged from a rubber extruder. Especially when a bank amount increases, rubber is swollen out from the roller head profile (see Fig. 25. A reference numeral 508A refers to a swollen-out portion), and the swollen-out portion 508A is kept in close contact with the roller head 502, and sometimes adhered to the rolled rubber sheet, and there is caused a problem in that foreign matters enter the rolled rubber sheet.

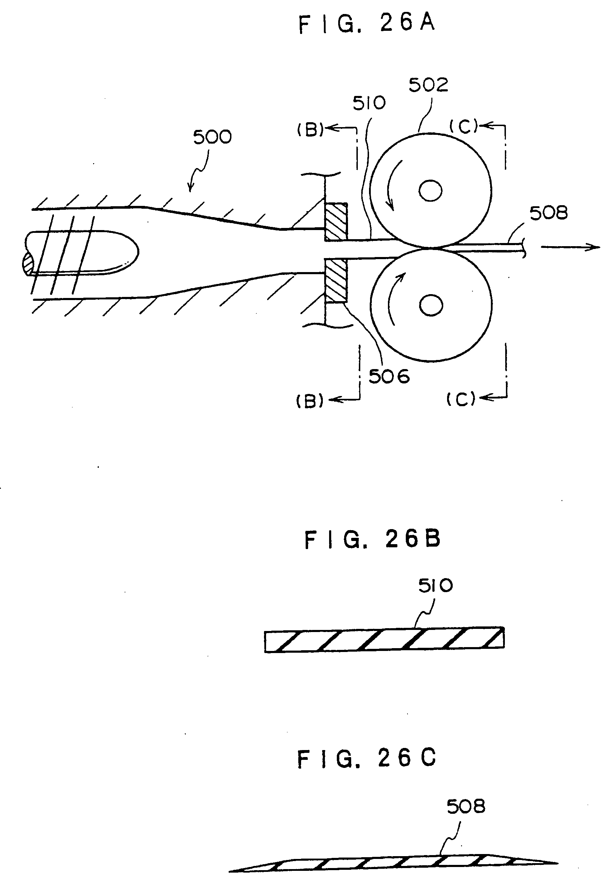

As shown in Fig. 26 (A), if a rubber bank is not produced on the roller head 502, a comparatively wide extruding rubber 510 having a cross-sectional configuration as shown in Fig. 26 (B) is rolled from the cap 506 by the roller head 502.

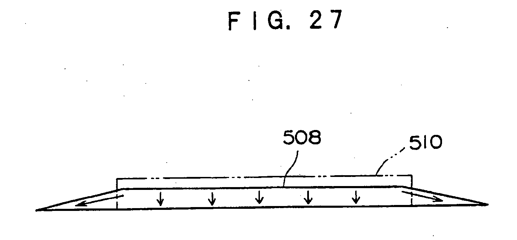

During the rolling, rolling directions at a straight portion at the center of the rubber sheet (a portion having a fixed thickness) and those at taper portions are different from each other (directions of arrows: rubber orientations) as shown in Fig. 27. As a result, a sheet-contracted amount generated after the rolling is taper portions< straight portion. Accordingly, a phenomenon in which taper portions are corrugated with time, whereby a problem is caused in that sheet quality may deteriorate.

In other words, when a low quality elongated rubber strip is used, as a matter of course, it is difficult to obtain a high quality rubber strip.

In view of the aforementioned facts, an object of the present invention is to provide a method of manufacturing a thin rubber member which has a constant thickness and which can accommodate various sizes, and a rubber roller and a rubber rolling method which can sequentially provide an elongated rubber strip having excellent configuration accuracy and high quality that can be used for manufacturing the thin rubber member.

Attention is also drawn to the disclosures of JP 07-148757, JP11-314261, JP 2000-043072 and JP2001-328180.

### Disclosure of the Invention

The above object is achieved according to the invention by the rubber roller die as defined in claim 1, by the method of rolling a rubber as defined in claim 6, by the use of the rubber roller die as defined in claim 7 and in claim 8 and by the use of the method as defined in claim 9 and in claim 11. Particular embodiments of the invention are the subject of the respective dependent claims.

Claim 1 of the present invention is a rubber roller die, as claimed in claim 1.

The width of the elongated rubber strip fed out from the pair of the rollers is influenced by the discharge amount of the unvulcanized rubber from the extruder and the number of rotations of the pair of the rollers.

The control means controls to maintain the number of the discharge amount of the unvulcanized rubber from the extruder and the number of rotations of the pair of the rollers constant. Further, the control means controls to prevent the pair of the rollers from generating a knead-back rubber.

Accordingly, the elongated rubber strip having a predetermined width can be molded and fed out with high accuracy and stability.

Since merely providing the control means suffices the present invention, more space is not required, and a conventional knead-back operation is also unnecessary. Accordingly, the rubber roller of the present invention is advantageous in respect of space because it has a simple structure and can be manufactured inexpensively. Consequently, there are few troubles and there are extremely few chances that inhibit productivity.

Further, since a knead-back is not effected, rubber properties do not change, whereby rubber quality can be maintained high.

Claim 2 of the present invention is the rubber roller die according to claim 1, further comprising a width sensor which detects a width of an elongated rubber strip fed out from the pair of the rollers, wherein, in order to feed an elongated rubber strip having a predetermined width, the control means feedback-controls a driving of the extruder on the basis of a width of the elongated rubber strip detected by the width sensor.

Next, an operation and an effect of the rubber roller according to claim 8 will be explained.

In the rubber roller die according to claim 2, since the control means feedback-controls a driving of the extruder on the basis of the width of the elongated rubber strip detected by the width sensor, a knead-back rubber is not generated, and accordingly, an elongated rubber strip having a predetermined width can be molded with high accuracy and excellent stability, and fed out.

Since mere addition of the width sensor to the control means suffices, more space is not required.

Claim 3 of the present invention is the rubber roller die according to claim 1, further comprising a metering discharge pump which is provided at the extruder and which feeds the unvulcanized rubber toward the cap, and a pressure sensor which detects a pressure of the unvulcanized rubber at an inlet of the metering discharge pump, wherein the control means feedback-controls a driving of the extruder on the basis of a pressure of an unvulcanized rubber detected by the pressure sensor, and properly maintains a pressure of an unvulcanized rubber.

Next, an operation and an effect of the rubber roller according to claim 9 will be explained.

In the rubber roller die according to claim 3, the control means feedback-controls a driving of the extruder, and maintains a pressure of the unvulcanized rubber, which is extruded from the extruder and reached to the inlet of the metering discharge pump, within a fixed range. Therefore, a proper discharge amount of the unvulcanized rubber from the metering discharge pump is retained thus making it easy to maintain a proper configuration of the elongated rubber strip fed out from the pair of the rollers.

Claim 4 of the present invention is the rubber roller die according to claim 3, further comprising a rectifier tube which is interposed between the metering discharge pump and the cap, whereby the unvulcanized rubber is evenly supplied into the cap which forms the unvulcanized rubber into a flat strip shape.

Next, an operation and an effect of the rubber roller die according to claim 4 will be explained.

If a distance from the metering discharge pump to a head is short, uneven filling of an unvulcanized rubber into the head occurs. Accordingly, the rectifier tube is interposed between the metering discharge pump and the cap, and uneven filling of the unvulcanized rubber into the head can be prevented, whereby the unvulcanized rubber can be maintained properly and stabilized.

Claim 5 of the present invention is the rubber roller die according to claim 1, wherein the cap has an opening whose shape is similar to a shape of a cross section along a transverse direction of the elongated rubber strip, the pair of the rollers has a portion with a gap whose shape is similar to a shape of the cross section in the transverse direction of the elongated rubber strip, between the rollers, and the control means controls at least one of an extruding amount per an hour of the unvulcanized rubber extruded by using the extruder, and a rotational speed of the pair of the rollers, so as not to form an unvulcanized rubber bank.

Next, an operation and an effect of the rubber roller die according to claim 5 of the present invention will be explained.

First, in the first step, the unvulcanized rubber member is extruded from the cap of the extruder.

The shape of the opening of the cap is similar to a cross-section in the transverse direction of the elongated rubber strip in which taper portions are formed at both end portions of the elongated rubber strip. Each of the taper portions has a thickness which gradually decreases toward the end portions in the transverse direction of the elongated rubber strip.

For this reason, a cross-section in a transverse direction of the unvulcanized rubber member extruded from the cap is similar to a cross-section along a transverse direction of the elongated rubber strip. Namely, the elongated rubber strip has taper portions each of which thickness gradually decreased toward the end portions in a transverse direction of the elongated rubber strip.

Next, the unvulcanized rubber member extruded from the cap is rolled due to the rotation of the pair of the rollers.

During the rolling, in the same way, the unvulcanized rubber member extruded from the cap is rolled through the portion whose shape is also similar to a cross-section along a transverse direction of the elongated rubber strip.

Further, the control means controls at least one of an extruding amount per an hour of the unvulcanized rubber extruded by using the extruder, and a rotational speed of the pair of the rollers, so as not to form an unvulcanized rubber bank on the pair of the rollers.

Since a rubber bank is not formed on the pair of the rollers, neither unnecessary unvulcanized rubber nor foreign matters (unnecessary unvulcanized rubber peeled off from the roller surface) are deposited on a roller surface and on the elongated rubber strip, respectively.

Regarding the description of "a rubber bank is not formed on the pair of the rollers", it include an extremely small amount of rubber bank (which, for example, is caused by a rubber extruding amount or an error of the rotational number of the rollers) formed within a range which does not form corrugations at the taper portions of the resultant elongated rubber strip.

Claim 6 of the present invention is a method of rolling a rubber as claimed in claim 6.

Next, an operation and an effect of the method of rolling a rubber according to claim 6 of the present invention will be explained.

First, in the first step, the unvulcanized rubber member is extruded from the cap of the extruder.

Since the shape of the opening of the cap is similar to a cross-sectional configuration in the transverse direction of the elongated rubber strip in which taper portions are formed at both end portions of the elongated rubber strip and each of the taper portions has a thickness which gradually reduces toward the end portions in the transverse direction of the elongated rubber strip, a cross-section in a transverse direction of the unvulcanized rubber member extruded from the cap is similar to that of the elongated rubber strip. Namely, the elongated rubber strip has taper portions each of which thickness gradually decreased toward the end portions in a transverse direction of the elongated rubber strip.

Next, the unvulcanized rubber member extruded from the cap is rolled due to a rotation of the pair of the rollers.

During the rolling, the unvulcanized rubber member extruded from the cap is rolled through the opening portion whose configuration is also close to a cross-sectional configuration along a transverse direction of the elongated rubber strip.

Further, the control means controls at least one of an extruding amount per an hour of the unvulcanized rubber extruded by using the extruder, and a rotational speed of the pair of the rollers, so as not to form an unvulcanized rubber bank on the pair of the rollers.

Since a rubber bank is not formed on the pair of the rollers, neither unnecessary unvulcanized rubber nor foreign matters (unnecessary unvulcanized rubber peeled off from the roller surface) are deposited on a roller surface and on the elongated rubber strip, respectively.

Regarding the description of "a rubber bank is not formed on the pair of the rollers", it includes an extremely small amount of rubber bank (which, for example, is caused by a rubber extruding amount or an error of the rotational number of the rollers) formed within a range which does not form corrugations at the taper portions of the resultant elongated rubber strip.

### BRIEF DESCRIPTION OF THE DRAWINGS .

Fig. 1 is a perspective view of an extruder and a roller die which is useful for understanding the present invention;
Fig. 2(A) is a perspective view of a cutter;
Fig. 2(B) is a side view of the cutter;
Fig. 3 is a perspective view of a cutter which is useful for understanding the present invention;
Fig. 4 is a perspective view of a cutter which is useful for understanding the present invention;
Fig. 5(A) is a perspective view of a rubber sheet;
Fig. 5(B) is a cross-sectional view of the rubber sheet shown in Fig. 5(A) cut along a line 5(B)-5(B);
Fig. 5(C) is a cross-sectional view of the rubber sheet shown in Fig. 5(A) cut along a line 5(C)-5(C);
Fig. 6 is a perspective view of a drum in the middle of being wound by an elongated rubber sheet;
Fig. 7 is a perspective view of the elongated rubber strip and the drum after a trimming;
Fig. 8 (A) is a plan view of a rubber sheet;
Fig. 8(B) is a cross-sectional view of the rubber sheet shown in Fig. 8(A) cut along a line 8(B)-8(B);
Fig. 9(A) is a plan view of vicinities of end portions in a longitudinal direction of an elongated rubber strip;
Fig. 9(B) is a cross-sectional view of the elongated rubber strip shown in Fig. 9(A) cut along a line 9(B)-9(B);
Fig. 10 is a perspective view of an elongated rubber strip which is useful for understanding the present invention;
Fig. 11 is an appearance perspective view of a rubber roller according to an embodiment of the present invention;
Fig. 12 is a side view of the rubber roller;
Fig. 13(A) is a view of a target cross-sectional configuration of an elongated rubber strip;
Fig. 13(B) is a view of a configuration of a cap;
Fig. 14 is a block diagram of a control system of the rubber roller;
Fig. 15(A) is a side view of a rubber roller according to an embodiment of the present invention;
Fig. 15(B) is a cross-sectional view in a transverse direction of an unvulcanized rubber discharged from a cap;
Fig. 15(C) is a cross-sectional view in a transverse direction of a rubber strip elongated by a roller head;
Fig. 16 is a front view of the cap;
Fig. 17 is a front view of the roller head;
Fig. 18 is a block diagram of an electric system;
Fig. 19 is an explanatory view illustrating a direction in which a rubber is rolled;
Fig. 20 is a perspective view of a 2-roller die for manufacturing a conventional inner liner;
Fig. 21 is a perspective view of a 1-roller die for manufacturing a conventional inner liner;
Fig. 22 is a view of a calendar roll involving a conventional knead-back;
Fig. 23 is a view of a conventional 1-roller die;
Fig. 24(A) is a side view of a conventional roller on which a rubber bank is formed;
Fig. 24(B) is a front view of a cap;
Fig. 24(C) is a front view of another cap;
Fig. 24(D) is a cross-sectional view along a transverse direction of a rolled rubber sheet rolled by a roller head;
Fig. 25 is a cross-sectional view along a transverse direction of the rolled rubber sheet on which a swollen-out portion has been formed;
Fig. 26(A) is a side view of a conventional roller on which a rubber bank is not formed;
Fig. 26(B) is a cross-sectional view in a transverse direction of an unvulcanized rubber discharged from a cap;
Fig. 26(C) is a cross-sectional view along a transverse direction of a rolled rubber sheet rolled by a roller head; and
Fig. 27 is an explanatory view illustrating a direction in which a rubber is rolled by a conventional apparatus.

### First example, which is useful for understanding the present invention

With reference to the drawings, i.e., Figs, 1 to 5, a method of manufacturing a thin rubber member useful for understanding the present invention will be explained, hereinafter.

### (An apparatus for manufacturing an elongated rubber strip)

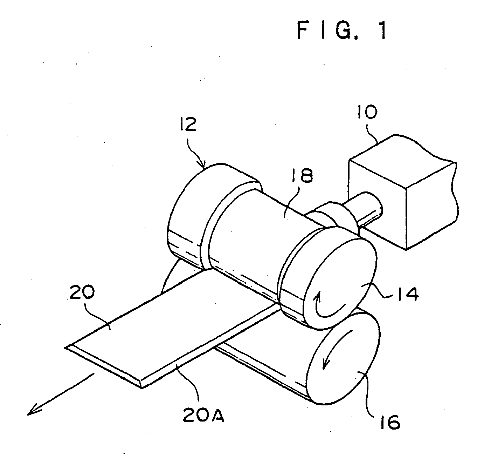

As shown in Fig. 1, a roller die 12 is disposed at a discharge outlet side of an extruder 10.

The roller die 12 comprises an upper roller 14 and a lower roller 16. A wide groove 18 is formed at the center of the upper roller 14.

The depth of the groove 18 is fixed in a roller axial direction, and groove walls at both sides of the groove 18 are inclined at an angle of about 87° with respect to a roller radial direction.

The upper roller 14 and the lower roller 16 are rotated by an unillustrated driving apparatus in a direction of arrow.

The extruder 10 extrudes an unvulcanized rubber composition, that is supplied into a hopper (not shown), from the discharge outlet. The rubber composition, which is extruded from the discharge outlet, is passed through the roller die 12, and then extruded as an elongated rubber strip 20 having a fixed thickness.

Further, both side portions in a transverse direction of the elongated rubber strip 20 extruded from the roller die 12 form taper portions 20A each of which is inclined at an angle of about 3° with respect to a sheet surface. Moreover, the angle of each of the transverse direction side portions of the elongated rubber strip 20 is not limited to an angle of 3°, and instead, can be another angle.

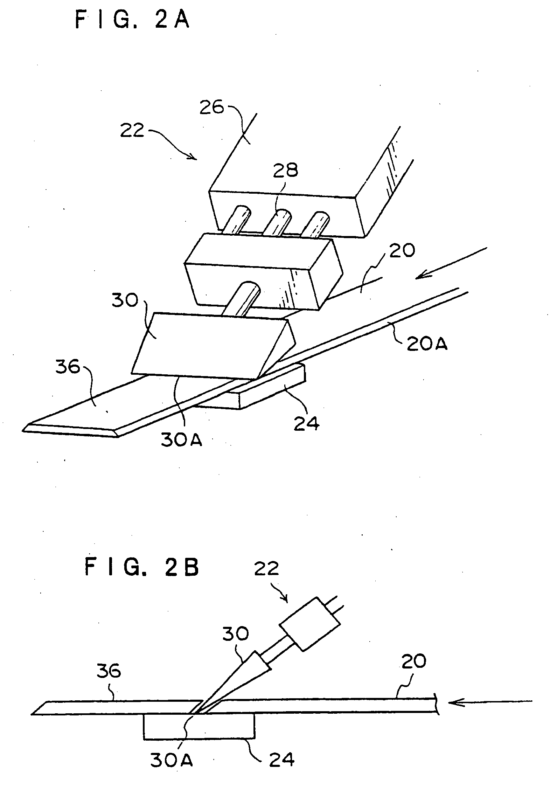

A cutting apparatus 22 as shown in Fig. 2 is disposed in a direction in which a rubber sheet is extruded from the roller die 12.

The cutting apparatus 22 includes an anvil 24 that supports a bottom surface of the elongated rubber strip 20.

A cutter 30 is disposed above the anvil 24, and is connected to a rod 28 of a driving apparatus 26 comprising a cylinder, a motor and the like.

An upper surface of the anvil 24 is horizontal, and a blade 30A of the cutter 30 is parallel to the upper surface of the anvil 24, and also in parallel to a transverse direction of the elongated rubber strip 20 (orthogonal to a longitudinal direction thereof).

The rod 28 moves in an axial direction, and the cutter 30 is moved in a direction separating from the anvil 24 at an angle of 45° with respect to the longitudinal direction of the elongated rubber strip 20.

A heater (not shown) for heating the cutter 30 (for example, to a temperature of 200 to 300°C) is housed in the cutter 30.

Due to heating, the cutter 30 can cut the rubber composition easily. Further, when an ultrasonic generator is attached to the cutter 30 to oscillate the cutter 30, the cutter 30 can also cut the rubber composition easily.

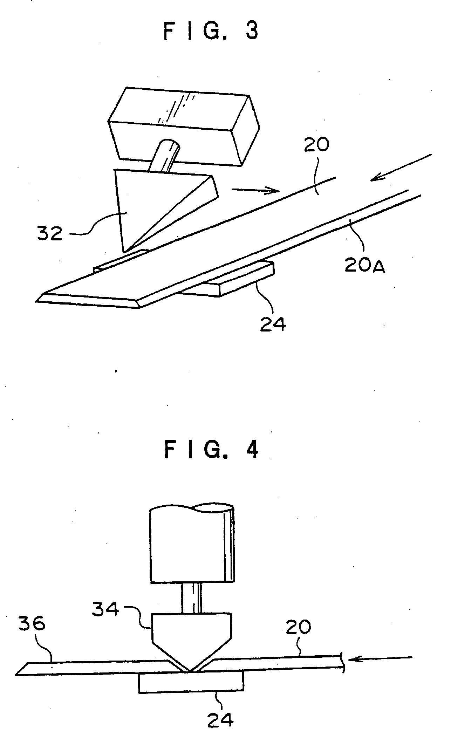

The cutting apparatus according to the present example is of a so-called guillotine type. A cutter 32 as shown in Fig. 3 can be slid in a transverse direction of the elongated rubber strip 20 by a driving means such as a cylinder, a motor or the like (not shown), and the elongated rubber strip 20 is cut. As shown in Fig. 4, a crash cutter 34 whose lower end is angled at about 90° is pressed on the elongated rubber strip 20, and the elongated rubber strip 20 is cut.

### (A manufacturing process of a rubber sheet)

Next, a manufacturing process of a rubber sheet will be explained.

First, during the initial process, the elongated rubber strip 20 is extruded and cut to a predetermined length by the cutting apparatus 22 to form a plurality of strip-shaped (rectangular) rubber sheets 36 is formed.

Further, a length of each of the strip-shaped rubber sheets 36 corresponds to a width as a inner liner of a tire (size in a direction orthogonal to a tire circumferential direction).

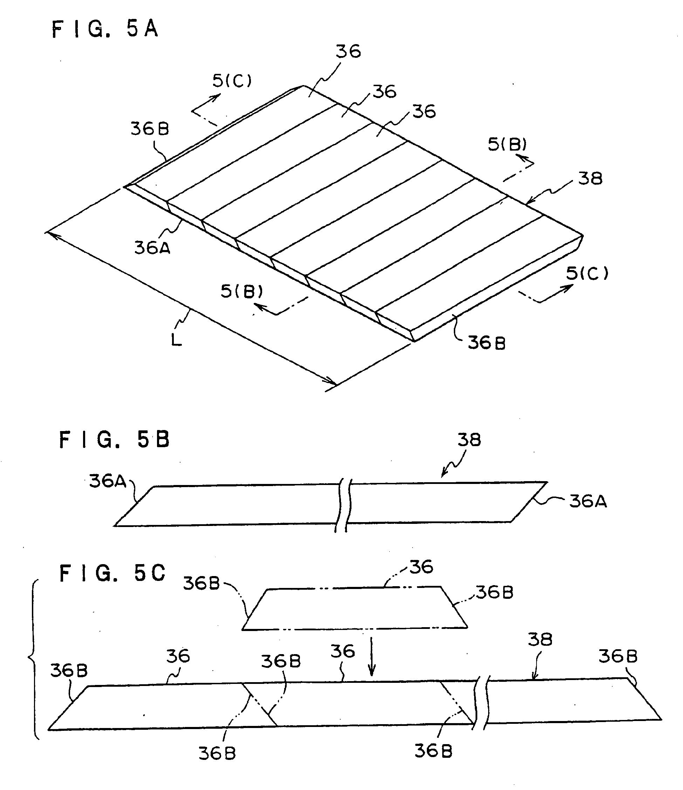

Next, as shown in Figs. 5 (A) and (C), the strip-shaped rubber sheets 36 are arranged side by side in a transverse direction such that their respective taper portions 36A (each of which is cut at an angle of 45°) in a longitudinal direction are all arranged along a uniform line, and their respective taper portions 36B (portions extruded at an angle of about 3°) at end portions in the transverse direction are overlapped with one another, whereby a sheet of an unvulcanized inner liner 38 can be formed.

Since the strip-shaped rubber sheet 36 plastically deforms in a simple manner before vulcanization, as shown in Fig. 5(C), when the taper portion 36A (illustrated by a chain double-dashed line) of one strip-shaped rubber sheet 36 is overlapped with the taper portion 36A of another strip-shaped rubber sheet 36, the taper portion 36A of one strip-shaped rubber sheet 36 to be adhered later (illustrated by the chain double-dashed line) deforms in conformity with the taper portion 36A of another strip-shaped rubber sheet 36 the latter taper portion 36A adheres (illustrated by a solid line), and the surface of the adhered rubber sheets does not become irregular.

As a result, the inner liner 38, all the end portions of which are tapered, can be obtained.

Further, a size L in Fig. 5(A) is that measured in a direction corresponding to a tire circumferential direction.

The unvulcanized inner liner 38 that is formed in such a manner as described above is used for molding a green tire in accordance with an ordinary tire manufacturing method.

In other words, the unvulcanized inner liner 38 is wound around an outer circumferential surface of a band-forming drum, and portions of both end portions in a circumferential direction of the inner liner 38 are overlapped with one another. Thereafter, various tire structural members such as conventional carcass ply, bead core, bead filler, belt, and tread are pasted on the inner liner 38, and a green tire is completed.

Since all the portions, that are exposed at the inner surface side of the inner liner 38 disposed at an inner surface of the green tire, are formed into a tapered shape, chewing of air or an inner surface liquid into the edge portions can be prevented.

Further, in the present example, the length of the strip-shaped rubber sheet can be changed, and the number of connections can be changed, whereby the inner liner 38 capable of accommodating various tires can be obtained.

### [Second example]

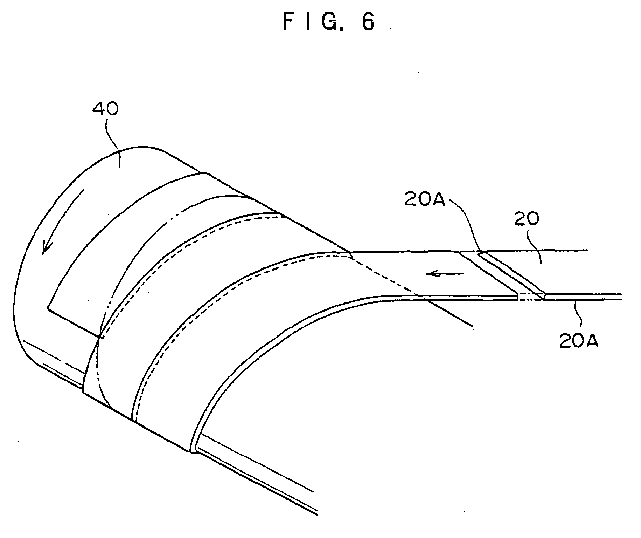

Next, with reference to Figs. 6 to 8, a method of manufacturing a thin rubber member which is useful for understanding the present invention will be explained.

### (An apparatus for manufacturing a rubber sheet)

As shown in Fig. 6, in the present example, first, the elongated rubber strip 20 extruded from the roller die 12 (not shown in Fig. 6) is spirally wound around an outer circumferential surface of a drum 40, which has a fixed diameter and rotates in a direction of arrow, with the taper portions 20A overlapped with one another.

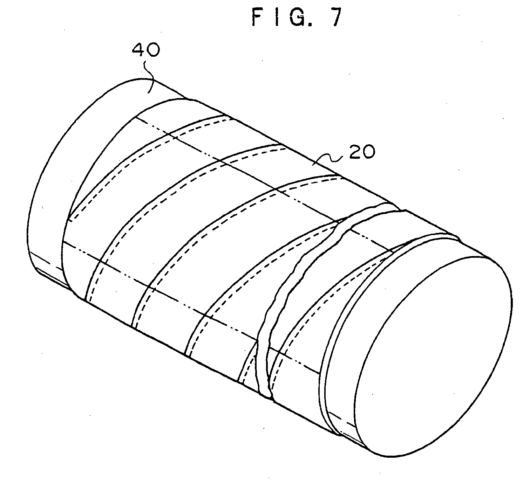

Next, as shown in Fig. 7, both end portions in the drum axial direction of the elongated rubber strip 20, which is spirally wound around the drum, are trimmed by a cutter or the like so as to be in parallel to the drum circumferential direction.

During the trimming, the cutter is inclined at an angle of 45° with respect to the sheet surface so that the cut surface forms an angle of 45° with respect to the sheet surface.

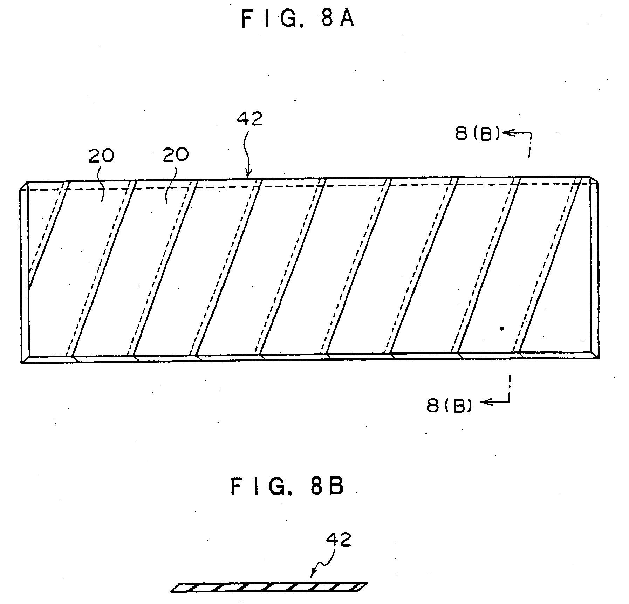

Next, the trimmed cylindrical elongated rubber strip 20 is cut by the cutter or the like along the drum axial direction (chain double-dot line portion in Fig. 7), and an inner liner 42 for one tire as shown in Fig. 8 is obtained.

When the trimmed cylindrical elongated rubber strip 20 is cut along the drum axial direction, the cutter is also inclined at an angle of 45° with respect to the sheet surface so that the cut surface forms an angle of 45° with respect to the sheet surface.

Also in the present example, the inner liner 42, all the end portions of which, are tapered can be obtained.

In the present example, the length and the width of the inner liner 42 can be changed in accordance with a tire due to an adjustment of a diameter of the drum 40, the number of cuts of elongated the rubber strip along the drum axial direction or the number of spiral winds.

Further, as for the drum 40, drums having various diameters are prepared in advance, among them, the drum 40 can be selected in accordance with the size of the inner liner 42. Further, the drum 40 having a structure in which the diameter of the drum 40 can be larger or smaller can be used.

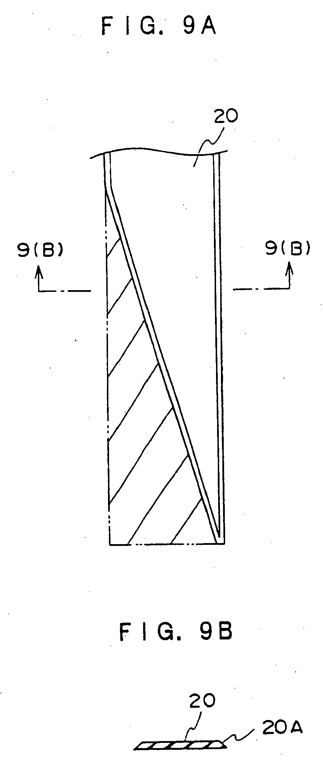

Moreover, in the present example, after the elongated rubber strip 20 has been spirally wound around the drum, both end portions of the elongated rubber strip 20 in the drum axial direction are trimmed. As shown in Fig. 9 (A), the vicinity of the end portion in the longitudinal direction of the elongated rubber strip 20 before the elongated rubber strip 20 is wound around the drum is diagonally cut, the diagonal portion is then removed, and the end portion in the longitudinal direction of the elongated rubber strip 20 is formed into a tapered shape as seen from a plan view. Accordingly, when the elongated rubber strip 20 is spirally wound around the drum, both end portions of the elongated rubber strip 20 in the drum axial direction can be made parallel to the circumferential direction of the drum.

Moreover, when the diagonal portion is removed, the cutting of the diagonal portion is carried out in such a way that the cut surface is inclined at an angle of 45°, for example, with respect to the sheet surface (see Fig. 9 (B)).

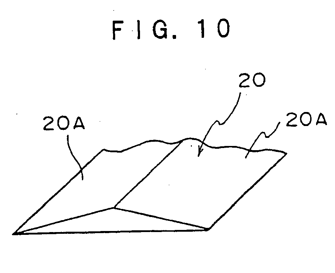

The elongated rubber strip 20 of the present embodiment has the taper portions 20A formed at both end portions in the transverse direction, and each of the taper portions 20A has a fixed thickness in the transverse direction. As shown in Fig. 10, the cross section of the elongated rubber strip 20 can be formed into a triangle (including only the taper portions 20A).

Even in a case of the elongated rubber strip 20 whose cross section is a triangle, if the taper portions 20A are overlapped with one another and spirally wound around the drum at a fixed pitch, an inner liner having a fixed thickness can be formed.

The cylindrical inner liner can be used unchanged.

For instance, in a case in which a green tire is manufactured, the elongated rubber strip 20 is spirally wound around the outer circumferential surface of the drum, and the cylindrical inner liner can be obtained around the outer circumferential surface of the drum.

Then, tire structural members such as a bead ring, a carcass ply, a side wall rubber, a belt, and a tread are pasted on the drum having the inner liner formed thereon, and a green tire can be formed.

Moreover, in the present example, a method of manufacturing an inner liner for a tire has been explained. It is a matter of course that the present invention can manufacture a rubber sheet for other applications.

### [Third embodiment]

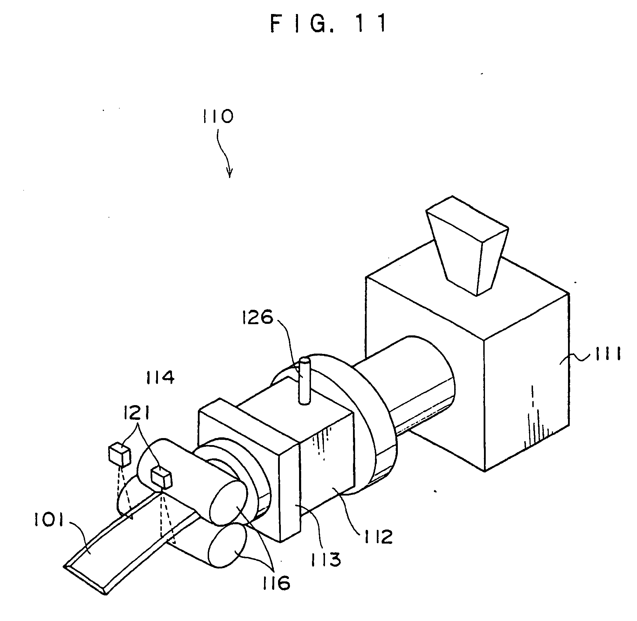

With reference to Figs. 11 to 14, a rubber roller 110 according to a third example of the present invention will be explained.

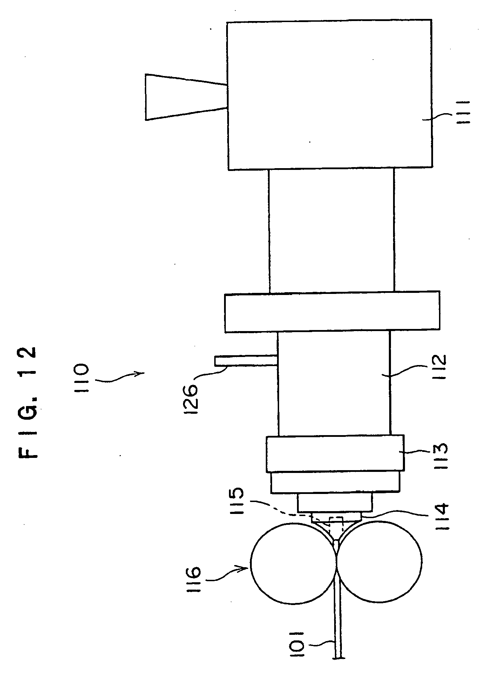

An outlook perspective view of the rubber roller 110 according to the present example is shown in Fig. 11, and a side view thereof is shown in Fig. 12.

The rubber roller 110 sequentially molds an elongated rubber strip 101 for forming a thin gauge sheet as a tire structural member.

The elongated rubber strip 101 is molded into a flat strip shape having taper portions 101A and 101A in which both edge portions are inclined in a tapered manner, and while the taper portions 101A are sequentially overlapped with one another, a thin gauge sheet is formed.

As shown in Figs. 11 and 12, the rubber roller 110 comprises an extruder 111, a gear pump 112, a rectifier tube 113, a cap 115 of a head 114, and a pair of calendar roll 116 in this sequential order. An unvulcanized rubber injected into the extruder 111 is molded, and sequentially discharged from the calender rolls 116 as the elongated rubber strip 101.

The extruder 111 extrudes the injected unvulcanized rubber or the like to the gear pump 112, while kneading the unvulcanized rubber by the rotation of the screw.

The gear pump 112 is a metering discharge pump which controls an amount of the unvulcanized rubber extruded from the extruder 111 to a discharge amount on the basis of a rotational speed of the gear, and discharges a certain amount of the unvulcanized rubber to the rectifier tube 113.

The rectifier tube 113 is a distance extender tube that connects the gear pump 112 and the cap 115 of the head 114 to form an appropriate distance therebetween, and can be interposed therebetween as needed.

When the unvulcanized rubber is discharged from the gear pump 112, concentration of the discharge of the rubber may often occur. Therefore, if a distance from the gear pump 112 to the head 114 is short, a degree at which the head 114 is filled with the rubber may vary. Accordingly, the rectifier tube 113 is interposed between the gear pump 112 and the cap 115 so as to prevent uneven filling of the unvulcanized rubber into the head 114. Consequently, filling of the unvulcanized rubber can appropriately be maintained and stabilized.

The cap 115 of the head 114 is formed into a configuration substantially similar to a target cross-sectional configuration of the elongated rubber strip 101 to be molded.

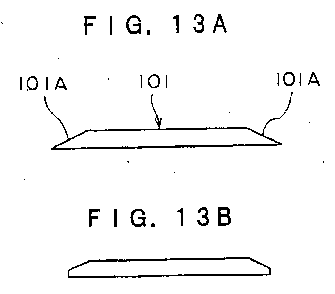

As shown in Fig. 13 (A), the target cross-sectional configuration of the elongated rubber strip 101 is formed into a flat plate shape having taper portions 101a and 101a, each of which is inclined in a tapered manner, at both edge portions. As shown in Fig. 13 (B), the cap 115 is provided with taper portions at both end edges, and is formed into an outlook configuration substantially similar to the target cross-sectional configuration of the elongated rubber strip 101.

Tip ends of the taper portions of the cap shape are cut off.

The cap 115 is formed into a configuration similar to the target cross-sectional configuration of the elongated rubber strip 101, whereby occurrence of a rubber drift is prevented so that a stable elongated rubber strip 101 can be obtained.

Further, when the elongated rubber strip 101 having taper portions at both end portions is molded, the cap 115 is also formed into a configuration in which taper portions are provided at both end portions, and accordingly, a rubber volume is adjusted, and a more stable elongated rubber strip 101 can be molded.

An unvulcanized rubber that is formed so as to correspond to the shape of the cap 115 is discharged into the calendar roll 116 comprising an upper roll and a lower roll.

The unvulcanized rubber discharged from the cap 115 is nipped by the upper roll and the lower roll of the calendar roll 116 whose outer circumferential surface is respectively formed into a predetermined configuration, and is shaped to the target cross-sectional configuration of the elongated rubber strip 101, whereby a final elongated rubber strip 101 is formed and sequentially fed.

In order to form the target cross-sectional configuration of the elongated rubber strip 101 without producing a rubber to be kneaded back, a proper amount of rubber necessary for forming the target cross-sectional configuration of the elongated rubber strip 101 must be consistently discharged and supplied by the gear pump 112.

Due to a change of temperature or a micro variation of rubber properties, an amount of rubber discharged by the gear pump 112 slightly changes. This change considerably influences the width of the elongated rubber strip 101.

Therefore, the rubber roller 110 of the present invention comprises a sheet width control means 120 that feedback-controls the width of the elongated rubber strip 101 discharged from the calendar roll 116.

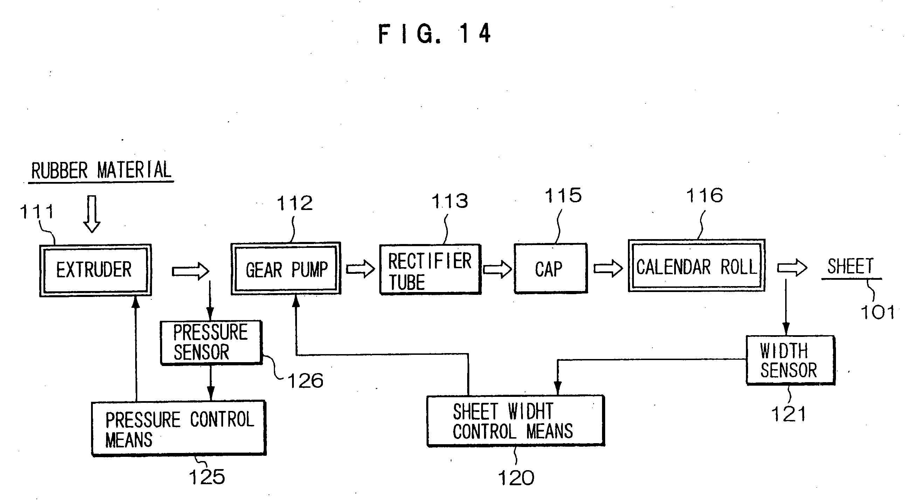

In other words, a width sensor 117, which is an optical sensor that optically detects a width of the elongated rubber strip 101, is provided at a downstream side of the calendar roll 116 (see Fig. 11), and as shown in Fig. 14, the sheet width control means 20 feedback-controls the gear pump 112 on the basis of the detected width of the elongated rubber strip 101 by the width sensor 117.

As shown in Fig. 14, at the same time, the rubber roller 110 of the present invention comprises a pressure control means 125 that controls a supply pressure into an unvulcanized rubber with respect to the extruder 111 for supplying the unvulcanized rubber into the gear pump 112.

For this reason, a pressure sensor 126 is provided at an inlet of the gear pump 112. On the basis of the detected pressure by the pressure sensor 126, the pressure control means 125 feedback-controls the extruder 111 so that an unvulcanized rubber is supplied stably at a constant range of pressure.

In this way, the sheet width control means 120 feeback-controls the gear pump 112, from which an unvulcanized rubber is supplied at a constant range of pressure, to discharge a proper amount of rubber in accordance with a micro change while observing the width of the elongated rubber strip 101. Accordingly, the width accuracy of the elongated rubber strip 101 can be maintained higher.

As described above, in the rubber roller 110 of the present invention, since the elongated rubber strip 101 having a highly accurate cross-sectional configuration can be molded without producing a rubber to be kneaded back, an occurrence of deterioration of a rubber quality due to a repetition of a knead-back can be prevented, and a knead-back operation is not required. Accordingly, the rubber roller 110 is able to take advantage of space, as equipment that can be manufactured simply and inexpensively, and causes fewer troubles and hardly inhibits productivity.

Further, in the present example, the sheet width control means 20 feedback-controls the gear pump 112 on the basis of the detected width by the width sensor 117, and the pressure control means 125 feedback-controls the extruder 111 on the basis of the detected pressure by the pressure sensor 126. As far as the elongated rubber strip 101 having a highly accurate cross-sectional configuration can be molded without producing a rubber to be kneaded back, motors (not shown) for driving the gear pump 112 and the extruder 111 can be controlled so as to have a constant rotational speed (i.e., have a constant discharge amount).

Moreover, another control means which controls a rotation of a motor that drives the calendar roll 116 can be provided so as to control a rotation of the motor on the basis of the detected width by the width sensor 117.

### [Fourth embodiment]

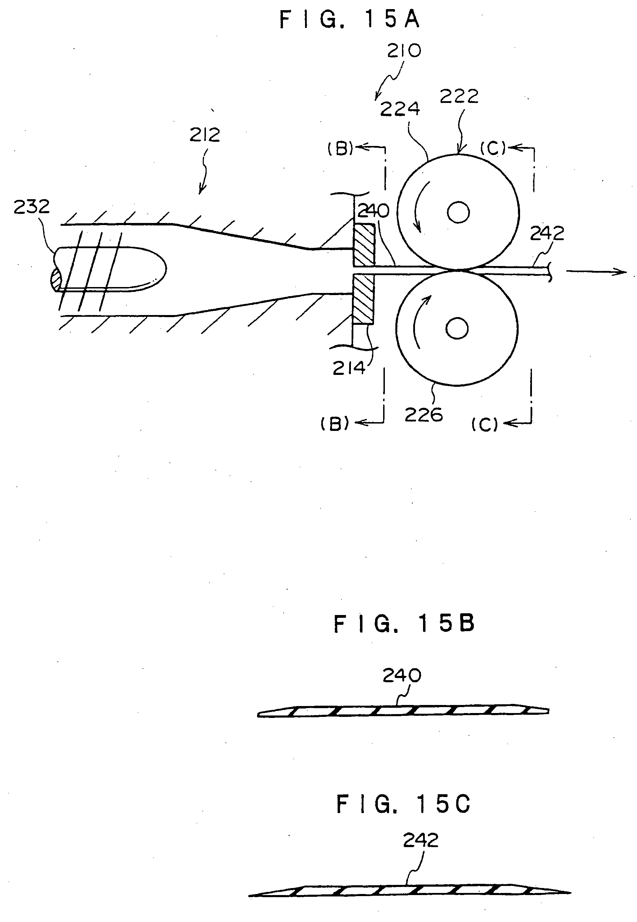

On the basis of Figs. 15 to 19, a rubber roller 210 according to a fourth embodiment of the present invention will be explained.

As shown in Fig. 15 (A), the rubber roller 210 of the present example has a rubber extruder 212.

The rubber roller 210 aims to obtain an elongated rubber strip 242 which has a cross-sectional configuration as shown in Fig. 15(C), whose thickness is constant at an intermediate portion in a transverse direction, and which has taper portions, each of which has a thickness gradually decreasing toward the end portions in the transverse direction, at both sides of the elongated rubber strip 242.

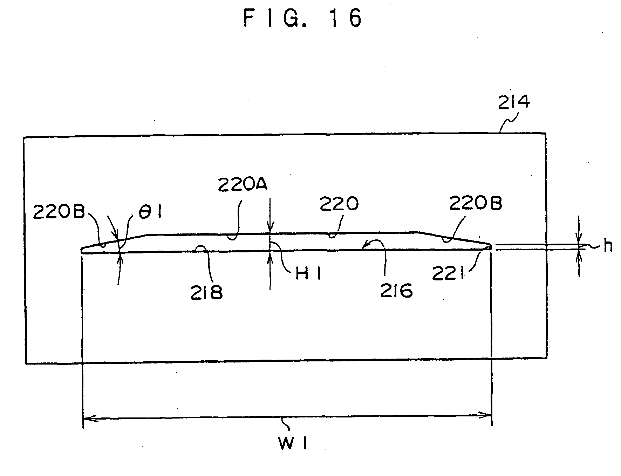

A laterally elongated opening 216, from which an unvulcanized rubber is extruded, as shown in Fig. 16 is formed at a cap 214 of a rubber extruder 212.

The opening 216 has an entirely linear lower edge 218, and an upper edge 220 whose central portion 220A is linear and is parallel to the lower edge 218 and which has inclining surfaces 220B formed at both end portions. Further, vertical portions 221 perpendicular to the lower edge 218 are formed at both end portions of the opening 216.

In other words, the opening 216 is formed into a configuration substantially similar to a cross-sectional configuration of the elongated rubber strip 242.

The opening 216 of the present example has a lateral width W1 of 100 mm, a height H1 of the opening 216 central portion of 1 mm, a height h of the vertical portion 221 of 0.5 mm, and an angle θ1 of the inclining surface 220B with respect to the lower edge 218 of 3°.

As shown in Fig. 15(A), a roller head 222 is provided at a downstream side in a direction a rubber is extruded, of the cap 214.

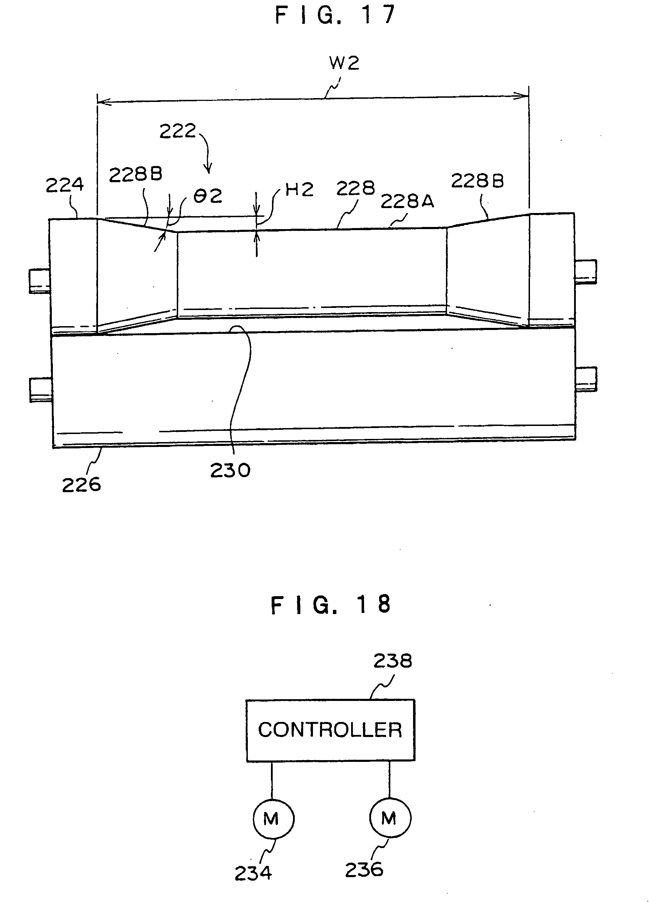

As shown in Fig. 17, the roller head 222 comprises an upper roller 224 and a lower roller 226.

The lower roller 226 has a constant diameter in an axial direction.

A groove 228 is formed at an intermediate portion in an axial direction.

The groove 228 has a central portion 228A whose depth is constant, and has inclining surfaces 228B, each of which depth gradually decreases, at both end portions of the groove 228.

In the present example, a groove width W2 is 98 mm, a groove depth H2 of the central portion of the groove is 0.8 mm, and an angle θ2 of the inclining surface (with respect to a rotational axis) is 3°.

The upper roller 224 and the lower roller 226 are kept in contact with each other at their outer circumferential portions excluding the groove 228. An opening portion formed by the groove 228 and the lower roller 226 is a molding portion 230 for rolling an unvulcanized rubber, and has a configuration substantially similar to a cross-sectional configuration of the elongated rubber strip 242.

The upper roller 224, the lower roller 226, and a screw 232 of the rubber extruder 212 are respectively rotated by unillustrated motors.

As shown in Fig. 18, a motor 234 for rotating the upper roller 224 and the lower roller 226, and a motor 236 for rotating the screw 232 of the rubber extruder 212 are connected to a controller 238 which controls rotational frequencies of the motors 234 and 236.

### (Operation)

Next, a description of an operation of the rubber roller 210 according to the present example will be made.

First, a sheet-shaped unvulcanized rubber member 240 is extruded from the opening 216 of the cap 214 of the rubber extruder 212.

A cross-sectional configuration in a transverse direction of the unvulcanized rubber member extruded from the cap 214 (see Fig. 15 (B)) is similar to that along a transverse direction of the elongated rubber strip 242, and has a width and a thickness which are slightly larger than those of the opening 216 of the cap 214.

The vertical portions 221 each having a height h of 0.5 mm are formed at both end portions of the opening 216 because, if heights of portions in the vicinities of both end portions (taper tip ends) are insufficient, a case may occur that an unvulcanized rubber is not fully extruded from the opening 216.

The height h of the vertical portion 221 is experimentally determined and set so that an unvulcanized rubber can be extruded evenly.

The unvulcanized rubber member extruded from the cap 214 is rolled by the roller head 222.

At this time, a controller 238 controls both the motor 236 of the rubber extruder 212 and the motor 234 of the roller head 222 so as not to form a rubber bank on the roller head 222.

In the present example, the unvulcanized rubber member 240 extruded from the cap 214 is rolled by the molding portion 230 which is formed into a configuration similar to a cross-sectional configuration in the transverse direction of the elongated rubber strip 242 and which is slightly smaller than a cross-section along the transverse direction of the elongated rubber strip 242.

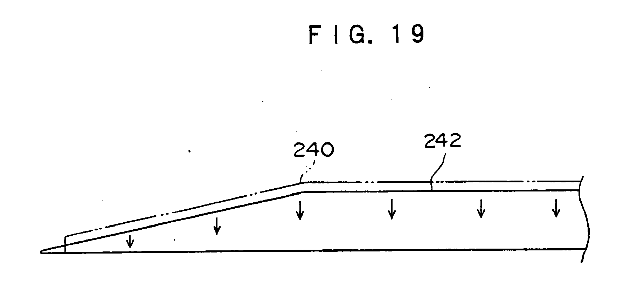

By rolling the unvulcanized rubber member 240 without forming a rubber bank on the roller head 222, a direction in which the unvulcanized rubber member 240 is rolled (direction of arrow shown in Fig. 19) becomes uniform in the transverse direction of the elongated rubber strip 242. As a result, a shrunk amount of the sheet which has been rolled becomes uniform in the transverse direction of the elongated rubber strip 242, and corrugations are not formed on the taper portions which have been cooled, whereby the elongated rubber strip 242 having excellent properties can be obtained.

Since the present invention is structured so as not to form a rubber bank on the roller head 222, no undesired unvulcanized rubber is deposited on the roller surface, and no foreign matter (undesired unvulcanized rubber that has been stripped off from the roller surface) is deposited on the elongated rubber strip 242.

Moreover, for example, there is a case in which an extremely small amount of a rubber bank is formed on the head 22 due to an error of the rubber extruding amount or the rotational frequency of the roller head. Unless corrugations are formed on the taper portions of the elongated rubber strip 242, even if the small amount of the rubber bank is formed, this comes within a category that "no rubber bank is formed on the roller head" as referred herein. Industrial Applicability

As described above, the method of manufacturing a thin rubber member according to the present invention is suitable for manufacturing a rubber sheet that is used as a tire structural member, for example, an inner liner or the like.

Further, the rubber roller and the method of rolling a rubber according to the present invention are suitable for manufacturing an elongated rubber strip that is used for manufacturing the thin rubber member.

## Claims

1. A rubber roller die (110; 210) for sequentially forming an elongated rubber strip,
the rubber roller die comprising:
an extruder (111; 212) configured to extrude an unvulcanized rubber from a cap (115; 214) to form the unvulcanized rubber into a flat-strip;
a pair of rollers (116; 224, 226) configured to further form the flat strip-shaped unvulcanized rubber discharged from the cap into a predetermined flat long rubber strip (101), and then feed the predetermined flat long rubber strip out;
a control means configured to control at least one of the extruder and the pair of the rollers thereby to sequentially form the rubber strip so as to be formed Into a predetermined cross-sectional configuration, **characterised in that** a groove (228) is formed at the centre of one of the rollers, and **in that**
the cap (214) comprises an opening (216) having an inclining surface (220B) formed at both end portions of the opening (216) and vertical portions (221) perpendicular to a lower edge (218) of the opening (216) formed at both end portions of the opening (216).

2. A rubber roller die as claimed in claim 1 comprising a width sensor (117) for detecting a width of an elongated rubber strip fed out from the pair of the rollers, wherein, in order to feed an elongated rubber strip having a predetermined width, the control means feedback-controls a driving of the extruder on the basis of a width of the elongated rubber strip detected by the width sensor.

3. A rubber roller die as claimed in any of claims 1 or 2, further comprising a metering discharge pump (112) which is provided at the extruder for feeding the unvulcanized rubber toward the cap, and a pressure sensor (126) which detects a pressure of the unvulcanized rubber at an inlet of the metering discharge pump,
wherein the control means feed back-controls a driving of the extruder on the basis of a pressure of an unvulcanized rubber detected by the pressure sensor, and maintains the pressure of the unvulcanized rubber proper.

4. A rubber roller die as claimed in claim 3, further comprising a rectifier tube (113) which is interposed between the metering discharge pump and the cap to evenly supply the unvulcanized rubber into the cap for forming the unvulcanized rubber into a flat strip.

5. A rubber roller die as claimed in claim 1, wherein the cap with an opening whose shape is similar to a cross section along a transverse direction of the elongated rubber strip, the pair of the rollers having a portion with a gap between the rollers, the portion whose shape is similar to a cross-section along a transverse direction of the elongated rubber strip, and the control means which controls at least one of an extruding amount per an hour unit of the unvulcanized rubber extruded from the extruder, and a rotational speed of the pair of the rollers so as to avoid formation of an unvulcanized rubber bank on the pair of the rollers.

6. A method of rolling a rubber for sequentially forming an elongated rubber strip, the method of rolling the rubber comprising
a first step of, by using an extruder (111), extruding an unvulcanized rubber from a cap (115) with an opening (216) whose shape is similar to a cross-section along a transverse direction of the rubber strip, the opening (216) having an inclining surface (220B) formed at both end portions of the opening (216) and vertical portions (221) perpendicular to a lower edge (218) of the opening (216) formed at both ends of the opening (216) and
a second step of, during a rotation of a pair of rollers (116), rolling the unvulcanized rubber which is extruded from the cap (115) at a portion with a gap whose shape is similar to a cross-section along a transverse direction of the rubber strip formed between the rollers, without forming a rubber bank on the rollers by feed-back controlling at least one of the rate of extrusion and a rotational speed of the pair of rollers (116).

7. Use of the rubber roller die of claim 1 for a method of manufacture of a thin rubber member which comprises cutting a long rubber strip (101;242) having taper portions (101A) formed at both side portions thereof to have a predetermined length so as to be inclined with respect to a normal line stood vertically on a sheet surface thereby to form a segmented rubber strip (36), and connecting a plurality of the segmented rubber strip to the each other in a transverse direction, such that taper portions at both side portions in a transverse direction of each of the segmented rubber strips are overlapped to each other.

8. Use of the rubber roller die of claim 1 for a method of manufacture of a thin rubber member which comprises cutting a long rubber strip (101) having taper portions (101A) formed at both side portions thereof to have a predetermined length thereby to form a segmented rubber strip, connecting a plurality of the segmented rubber strips to each other in a transverse direction thereof such that taper portions at both side portions in the transverse directions of each of the segmented rubber strips are overlapped to each other thereby to obtain a rubber sheet, and cutting both end portions of the rubber sheet in a direction orthogonal to a direction in which the segmented rubber strips are connected to each other so as to be inclined with respect to a normal line stood vertically on a sheet surface.

9. Use of the method of claim 6 for a method of forming a thin rubber member which comprises cutting a long rubber strip (101 ;242) having taper portions (101A) formed at both side portions thereof to have a predetermined length so as to be inclined with respect to a normal line stood vertically on a sheet surface thereby to form a segmented rubber strip (36), and connecting a plurality of the segmented rubber strip to the each other in a transverse direction, such that taper portions at both side portions in a transverse direction of each of the segmented rubber strips are overlapped to each other.

10. Use of the method of claim 6, as claimed in claim 9, wherein the connecting step of the method of manufacturing a thin rubber member comprises a spirally winding the rubber strip while overlapping the taper portions thereof with each other.

11. Use of the method of claim 6 for a method of forming a thin rubber member which comprises cutting a long rubber strip (101) having taper portions (101A) formed at both side portions thereof to have a predetermined length thereby to form a segmented rubber strip, connecting a plurality of the segmented rubber strips to each other in a transverse direction thereof such that taper portions at both side portions In the transverse directions of each of the segmented rubber strips are overlapped to each other thereby to obtain a rubber sheet, and cutting both end portions of the rubber sheet in a direction orthogonal to a direction in which the segmented rubber strips are connected to each other so as to be inclined with respect to a normal line stood vertically on a sheet surface.

## Patentansprüche

1. Gummiwalzenwerkzeug (110; 210) zum sequentiellen Formen eines länglichen Gummistreifens, wobei das Gummiwalzenwerkzeug Folgendes umfasst:
einen Extruder (111; 212), der dafür konfiguriert ist, einen nicht-vulkanisierten Gummi aus einer Kappe (115; 214) zu extrudieren, um den nicht-vulkanisierten Gummi zu einem Flachstreifen zu formen,
ein Paar von Walzen (116; 224, 226), die dafür konfiguriert sind, den aus der Kappe ausgestoßenen flachstreifenförmigen nicht-vulkanisierten Gummi weiter zu einem vorbestimmten flachen langen Gummistreifen (101) zu formen und danach den vorbestimmten flachen langen Gummistreifen auszuspeisen,
ein Steuerungsmittel, das dafür konfiguriert ist, wenigstens eines von dem Extruder und dem Paar von Walzen zu steuern, um dadurch sequentiell den Gummistreifen zu formen, so dass er zu einer vorbestimmten Querschnittskonfiguration geformt wird, **dadurch gekennzeichnet, dass** eine Rille (228) an der Mitte einer der Walzen geformt ist, und dadurch, dass
die Kappe (214) eine Öffnung (216) umfasst, die eine geneigte Fläche (220B), die an den beiden Endabschnitten der Öffnung (216) geformt ist, und vertikale Abschnitte (221), die senkrecht zu einer Unterkante (218) der Öffnung (216), an den beiden Endabschnitten der Öffnung (216) geformt sind, hat.

2. Gummiwalzenwerkzeug nach Anspruch 1, das einen Breitensensor (117) zum Erfassen einer Breite eines aus dem Paar der Walzen ausgespeisten länglichen Gummistreifens umfasst, wobei das Steuerungsmittel, um einen länglichen Gummistreifen zu speisen, der einen vorbestimmte Breite hat, eine Ansteuerung des Extruders auf der Grundlage einer durch den Breitendetektor erfassten Breite des länglichen Gummistreifens durch Feedback regelt.

3. Gummiwalzenwerkzeug nach Anspruch 1 oder 2, das ferner eine Dosierungsabgabepumpe (112), die an dem Extruder bereitgestellt wird, um den nicht-vulkanisierten Gummi zu der Kappe hin einzuspeisen, und einen Drucksensor (126), der einen Druck des nicht-vulkanisierten Gummis an einem Einlass der Dosierungsabgabepumpe erfasst, umfasst,
wobei das Steuerungsmittel eine Ansteuerung des Extruders auf der Grundlage eines durch den Drucksensor erfassten Drucks des nicht-vulkanisierten Gummis durch Feedback regelt und den Druck des nicht-vulkanisierten Gummis sachgemäß aufrechterhält.

4. Gummiwalzenwerkzeug nach Anspruch 3, das ferner eine Begradigungsröhre (113) umfasst, die zwischen die Dosierungsabgabepumpe und die Kappe geschaltet ist, um den nicht-vulkanisierten Gummi gleichmäßig in die Kappe zuzuführen, um den nicht-vulkanisierten Gummi zu einem flachen Streifen zu formen.

5. Gummiwalzenwerkzeug nach Anspruch 1, wobei die Kappe mit einer Öffnung versehen ist, deren Form ähnlich einem Querschnitt entlang einer Querrichtung des länglichen Gummistreifens ist, das Paar der Walzen einen Abschnitt mit einem Spalt zwischen den Walzen hat, wobei die Form des Abschnitts ähnlich einem Querschnitt entlang einer Querrichtung des länglichen Gummistreifens ist, und das Steuerungsmittel wenigstens eines von einer Extrudiermenge je einer Stundeneinheit des aus dem Extruder extrudierten nicht-vulkanisierten Gummis und einer Drehgeschwindigkeit des Paares der Walzen steuert, um so die Bildung eines nicht-vulkanisierten Gummiwalls an dem Paar der Walzen zu vermeiden.

6. Verfahren zum Walzen eines Gummis zum sequentiellen Formen eines länglichen Gummistreifens, wobei das Verfahren zum Walzen des Gummis Folgendes umfasst:
einen ersten Schritt des Extrudierens, unter Verwendung eines Extruders (111), eines nicht-vulkanisierten Gummis aus einer Kappe (115) mit einer Öffnung (216), deren Form ähnlich einem Querschnitt entlang einer Querrichtung des Gummistreifens ist, wobei die Öffnung (216) eine geneigte Fläche (220B), die an den beiden Endabschnitten der Öffnung (216) geformt ist, und vertikale Abschnitte (221), die senkrecht zu einer Unterkante (218) der Öffnung (216), an den beiden Endabschnitten der Öffnung (216) geformt sind, hat, und
einen zweiten Schritt des Walzens, während einer Drehung des Paars von Walzen (116), des nicht-vulkanisierten Gummis, der aus der Kappe (115) extrudiert wird, an einem Abschnitt mit einem Spalt, dessen Form ähnlich einem Querschnitt entlang einer Querrichtung des zwischen den Walzen geformten Gummistreifens ist, ohne einen Gummiwall an den Walzen zu formen, durch das durch Feedback Regeln wenigstens eines von der Extrusionsrate und einer Drehgeschwindigkeit des Paares von Walzen (116).

7. Verwendung des Gummiwalzenwerkzeugs nach Anspruch 1 für ein Verfahren zur Fertigung eines dünnen Gummielements, welches das Schneiden eines langen Gummistreifens (101; 242), der Verjüngungsabschnitte (101A) hat, die an den beiden Seitenabschnitten desselben geformt sind, damit sie eine vorbestimmte Länge haben, so dass sie in Bezug auf eine senkrechte Linie, die vertikal auf einer Bahnfläche steht, geneigt sind, um dadurch einen segmentierten Gummistreifen (36) zu formen, und das Verbinden von mehreren der segmentierten Gummistreifen miteinander in einer Querrichtung derart, dass die Verjüngungsabschnitte an den beiden Seitenabschnitten in einer Querrichtung jedes der segmentierten Gummistreifen miteinander überlappt werden, umfasst.

8. Verwendung des Gummiwalzenwerkzeugs nach Anspruch 1 für ein Verfahren zur Fertigung eines dünnen Gummielements, welches das Schneiden eines langen Gummistreifens (101), der Verjüngungsabschnitte (101A) hat, die an den beiden Seitenabschnitten desselben geformt sind, damit sie eine vorbestimmte Länge haben, um dadurch einen segmentierten Gummistreifen zu formen, und das Verbinden von mehreren der segmentierten Gummistreifen miteinander in einer Querrichtung derselben derart, dass die Verjüngungsabschnitte an den beiden Seitenabschnitten in den Querrichtungen jedes der segmentierten Gummistreifen miteinander überlappt werden, um dadurch eine Gummibahn zu erlangen, und das Schneiden der beiden Endabschnitte der Gummibahn in einer Richtung, senkrecht zu einer Richtung, in der die segmentierten Gummistreifen miteinander verbunden sind, so dass sie in Bezug auf eine senkrechte Linie, die vertikal auf der Bahnfläche steht, geneigt sind, umfasst.

9. Verwendung des Verfahrens von Anspruch 6 für ein Verfahren zum Formen eines dünnen Gummielements, welches das Schneiden eines langen Gummistreifens (101; 242), der Verjüngungsabschnitte (101A) hat, die an den beiden Seitenabschnitten desselben geformt sind, damit sie eine vorbestimmte Länge haben, so dass sie in Bezug auf eine senkrechte Linie, die vertikal auf einer Bahnfläche steht, geneigt sind, um dadurch einen segmentierten Gummistreifen (36) zu formen, und das Verbinden von mehreren der segmentierten Gummistreifen miteinander in einer Querrichtung derart, dass die Verjüngungsabschnitte an den beiden Seitenabschnitten in einer Querrichtung jedes der segmentierten Gummistreifen miteinander überlappt werden, umfasst.

10. Verwendung des Verfahrens von Anspruch 6, nach Anspruch 9, wobei der Verbindungsschritt des Verfahrens zur Fertigung eines dünnen Gummielements ein spiralförmiges Wickeln des Gummistreifens, während die Verjüngungsabschnitte desselben miteinander überlappt werden, umfasst.

11. Verwendung des Verfahrens von Anspruch 6 für ein Verfahren zum Formen eines dünnen Gummielements, welches das Schneiden eines langen Gummistreifens (101), der Verjüngungsabschnitte (101A) hat, die an den beiden Seitenabschnitten desselben geformt sind, damit sie eine vorbestimmte Länge haben, um dadurch einen segmentierten Gummistreifen zu formen, und das Verbinden von mehreren der segmentierten Gummistreifen miteinander in einer Querrichtung derselben derart, dass die Verjüngungsabschnitte an den beiden Seitenabschnitten in den Querrichtungen jedes der segmentierten Gummistreifen miteinander überlappt werden, um dadurch eine Gummibahn zu erlangen, und das Schneiden der beiden Endabschnitte der Gummibahn in einer Richtung, senkrecht zu einer Richtung, in der die segmentierten Gummistreifen miteinander verbunden sind, so dass sie in Bezug auf eine senkrechte Linie, die vertikal auf der Bahnfläche steht, geneigt sind, umfasst.

## Revendications

1. Filière à rouleau de caoutchouc (110 ; 210) pour former de manière séquentielle une bande de caoutchouc allongée, la filière à rouleau de caoutchouc comprenant :
une extrudeuse (111 ; 212), configurée de sorte à extruder un caoutchouc non vulcanisé à partir d'une chape (115 ; 214), pour conférer au caoutchouc non vulcanisé une forme de bande plate ;
une paire de rouleaux (116 ; 224 ; 226), configurés de sorte à poursuivre la formation du caoutchouc non vulcanisé en forme de bande plate déchargé de la chape en une bande de caoutchouc longue et plate prédéterminée (101), avant de transférer la bande de caoutchouc longue et plate prédéterminée vers l'extérieur ;
un moyen de commande, configuré de sorte à contrôler au moins l'une de l'extrudeuse et de la paire de rouleaux, pour former ainsi de manière séquentielle la bande de caoutchouc, afin de lui conférer une configuration de section transversale prédéterminée, **caractérisée en ce qu'**une rainure (228) est formée au niveau du centre de l'un des rouleaux ; et **en ce que**
la chape (214) comprend une ouverture (216) comportant une surface inclinée (220B), formée au niveau des deux parties d'extrémité de l'ouverture (216), et des parties verticales (221) perpendiculaires à un bord inférieur (218) de l'ouverture (216), formées au niveau des deux parties d'extrémité de l'ouverture (216).

2. Filière à rouleau de caoutchouc selon la revendication 1, comprenant un capteur de largeur (117) pour détecter une largeur d'une bande de caoutchouc allongée transférée hors de la paire de rouleaux, dans laquelle, en vue de transférer une bande de caoutchouc allongée ayant une largeur prédéterminée, le moyen de commande contrôle par rétroaction un entraînement de l'extrudeuse sur la base d'une largeur de la bande de caoutchouc allongée détectée par le capteur de la largeur.

3. Filière à rouleau de caoutchouc selon l'une quelconque des revendications 1 ou 2, comprenant en outre une pompe de décharge de dosage (112), agencée au niveau de l'extrudeuse pour transférer le caoutchouc non vulcanisé vers la chape, et un capteur de pression (126), détectant une pression du caoutchouc non vulcanisé au niveau de l'entrée de la pompe de décharge de dosage ;
dans laquelle le moyen de commande contrôle par rétroaction un entraînement de l'extrudeuse sur la base d'une pression du caoutchouc non vulcanisé détectée par le capteur de pression, et maintient la pression appropriée du caoutchouc non vulcanisé.

4. Filière à rouleau de caoutchouc selon la revendication 3, comprenant en outre un tube de redressement (113), agencé entre la pompe de décharge de dosage et la chape, pour amener de manière régulière le caoutchouc non vulcanisé dans la chape afin de conférer au caoutchouc non vulcanisé la forme d'une bande plate.

5. Filière à rouleau de caoutchouc selon la revendication 1, dans laquelle la chape comporte une ouverture dont la forme est similaire à une section transversale le long d'une direction transversale de la bande de caoutchouc allongée, la paire de rouleaux comportant une partie avec un espace entre les rouleaux, la partie dont la forme est similaire à une section transversale le long d'une direction transversale de la bande de caoutchouc allongée, le moyen de commande contrôlant au moins l'un d'une quantité d'extrusion par heure du caoutchouc non vulcanisé extrudé à partir de l'extrudeuse et d'une vitesse de rotation de la paire de rouleaux, de sorte à empêcher la formation d'un bourrelet de caoutchouc non vulcanisé sur la paire de rouleaux.

6. Procédé de moulage par roulement d'un caoutchouc pour former de manière séquentielle une bande de caoutchouc allongée, le procédé de moulage par roulement du caoutchouc comprenant :
une première étape consistant à extruder par l'intermédiaire d'une extrudeuse (111) un caoutchouc non vulcanisé à partir d'une chape (115), comportant une ouverture (216) dont la forme est similaire à une section transversale le long d'une direction transversale de la bande de caoutchouc, l'ouverture (216) comportant une surface inclinée (220B), formée au niveau des deux parties d'extrémité de l'ouverture (216), et des parties verticales (221) perpendiculaires à un bord inférieur (218) de l'ouverture (216), formées au niveau des deux extrémités de l'ouverture (216) ; et
une deuxième étape, consistant à mouler par roulement, au cours d'une rotation de la paire de rouleaux (116), le caoutchouc non vulcanisé extrudé à partir de la chape (115), avec un espace au niveau d'une partie, dont la forme est similaire à une section transversale le long d'une direction transversale de la bande de caoutchouc formée entre les rouleaux, sans former un bourrelet de caoutchouc sur les rouleaux, par un contrôle par rétroaction d'au moins l'une de la vitesse d'extrusion et de la vitesse de rotation de la paire de rouleaux (116).

7. Utilisation de la filière à rouleau de caoutchouc selon la revendication 1 pour un procédé de fabrication d'un élément de caoutchouc mince, comprenant les étapes de découpe d'une longue bande de caoutchouc (110 ; 242), comportant des parties effilées (101A) formées au niveau de ses deux parties latérales, de sorte à avoir une longueur prédéterminée et à être inclinée par rapport à une ligne normale tracée verticalement sur la surface d'une feuille, pour former ainsi une bande de caoutchouc segmentée (36), et de connexion de plusieurs bandes de caoutchouc segmentées les unes aux autres dans une direction transversale, de sorte que les parties effilées au niveau des deux parties latérales dans une direction transversale de chacune des bandes de caoutchouc segmentées, se chevauchent mutuellement.

8. Utilisation de la filière à rouleau de caoutchouc selon la revendication 1 pour un procédé de fabrication d'un élément de caoutchouc mince, comprenant les étapes de découpe d'une longue bande de caoutchouc (101), comportant des parties effilées (101A) formées au niveau de ses deux parties latérales, de sorte à avoir une longueur prédéterminée, pour former ainsi une bande de caoutchouc segmentée, de connexion de plusieurs bandes de caoutchouc segmentées les unes aux autres dans leur direction transversale, de sorte que les parties effilées au niveau des deux parties latérales, dans la direction transversale de chacune des bandes de caoutchouc segmentées, se chevauchent mutuellement, pour former ainsi une feuille de caoutchouc, et de découpe des deux parties d'extrémité de la feuille de caoutchouc, dans une direction orthogonale à une direction dans laquelle les bandes de caoutchouc segmentées sont connectées les unes aux autres, de sorte à être inclinées par rapport à une ligne normale tracée verticalement sur la surface d'une feuille.

9. Utilisation du procédé selon la revendication 6 pour un procédé de formation d'un élément de caoutchouc mince, comprenant les étapes de découpe d'une bande de caoutchouc longue (101 ; 242) comportant des parties effilées (101A) formées au niveau de ses deux parties latérales, de sorte à avoir une longueur prédéterminée et à être inclinées par rapport à une ligne normale tracée verticalement sur la surface d'une feuille, pour former ainsi une bande de caoutchouc segmentée (36), et de connexion de plusieurs des bandes de caoutchouc segmentées les unes aux autres dans une direction transversale, de sorte que les parties inclinées au niveau des deux parties latérales, dans une direction transversale de chacune des bandes de caoutchouc segmentées, se chevauchent mutuellement.

10. Utilisation du procédé selon la revendication 6, comme revendiqué dans la revendication 9, dans laquelle l'étape de connexion du procédé de fabrication d'un élément de caoutchouc mince comprend un enroulement en spirale de la bande de caoutchouc, tout en entraînant un chevauchement mutuel des parties effilées.

11. Utilisation du procédé selon la revendication 6, pour un procédé de formation d'un élément de caoutchouc mince, comprenant les étapes de découpe d'une bande de caoutchouc longue (101) comportant des parties effilées (101A) formées au niveau de ses deux parties latérales, de sorte à avoir une longueur prédéterminée, pour former ainsi une bande de caoutchouc segmentée, de connexion de plusieurs des bandes de caoutchouc segmentées les unes aux autres dans leur direction transversale, de sorte que les parties effilées au niveau des deux parties latérales, dans les directions transversales de chacune des bandes de caoutchouc segmentées, se chevauchent mutuellement, pour former ainsi une feuille de caoutchouc, et de découpe des deux parties d'extrémité de la feuille de caoutchouc dans une direction orthogonale à une direction dans laquelle les bandes de caoutchouc segmentées sont connectées les unes aux autres, de sorte à être inclinées par rapport à une ligne normale tracée verticalement sur la surface d'une feuille.
